(19) Europäisches Patentamt
European Patent Office
Office européen des brevets

(11) EP 4 806 944 A1

(12) EUROPEAN PATENT APPLICATION
published in accordance with Art. 153(4) EPC

(43) Date of publication:
**16.09.2026 Bulletin 2026/38**

(21) Application number: **24903267.3**

(22) Date of filing: **13.09.2024**

(51) International Patent Classification (IPC):
***C08J 5/18*** *(2006.01)* ***B32B 9/00*** *(2006.01)*
***B32B 27/32*** *(2006.01)*

(52) Cooperative Patent Classification (CPC):
**B32B 9/00; B32B 27/32; C08J 5/18**

(86) International application number:
**PCT/JP2024/032904**

(87) International publication number:
**WO 2025/126604 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.12.2023 JP 2023209397**

(71) Applicant: **C.I. TAKIRON Corporation**
**Kita-Ku**
**Osaka-Shi**
**Osaka 530-0001 (JP)**

(72) Inventors:
- **SASAHARA Kazufusa**
  **Osaka-shi, Osaka 530-0001 (JP)**
- **MORI Keiichi**
  **Osaka-shi, Osaka 530-0001 (JP)**
- **OSHIMA Hiroyuki**
  **Osaka-shi, Osaka 530-0001 (JP)**

(74) Representative: **advotec.**
**Patent- und Rechtsanwaltspartnerschaft mbB**
**Widenmayerstraße 4**
**80538 München (DE)**

# (54) BASE MATERIAL FILM FOR PACKAGING FILM

(57) A base film is configured to be laminated with a sealant film to form a packaging film. The base film includes a stretched film including at least one base layer containing, as a main component, high-density polyethylene having a density of 0.95 g/cm$^3$ or more. The base film has a heat shrinkage rate in a stretching direction at 120°C of less than 5%, and a tensile modulus of 2,000 MPa or more.

EP 4 806 944 A1

## Description

TECHNICAL FIELD

The present invention relates to base films used to form various types of packaging films.

BACKGROUND ART

Films for forming packaging bags, such as pouches and gusset bags, used for packaging daily necessities, food products, and the like (so-called packaging films) have been enhanced in functionality by laminating films made of the following different materials:

- base film: serves to improve strength and serves as a printing substrate, and is made of nylon, polyester, polypropylene, or the like;
- barrier film: serves to block oxygen, water vapor, light, and the like, and includes films made of a barrier resin such as EVOH (ethylene-vinyl alcohol copolymer), and synthetic resin films on which inorganic materials such as metals including aluminum or oxides thereof are vapor-deposited; and
- sealant film: serves to heat-seal (thermally fuse) films to each other, and is made of low-density polyethylene, linear low-density polyethylene, or the like.

In recent years, reduction in environmental impact has been demanded for plastic products in general, and recyclability has also been demanded for packaging films. However, laminate films made of different materials as described above exhibit poor recyclability due to the difficulty in separating the individual constituent layers. Accordingly, a method of using a single resin material has been proposed as a means for improving recyclability. In view of the fact that polyethylene is most widely used for packaging materials, packaging films with excellent recyclability have been developed in which both the sealant film and the base film are made of polyethylene.

However, packaging films in which both the sealant film and the base film are made of polyethylene exhibit insufficient mechanical strength. Consequently, positional misalignment (so-called print misregistration) tends to occur during printing. In order to avoid such print misregistration, a method has also been proposed in which a uniaxially stretched film made of polyethylene is used as a base film, as disclosed in Patent Document 1. In addition, laminates having a vapor-deposited layer on a base film have also been proposed to improve gas barrier properties.

CITATION LIST

PATENT DOCUMENTS

PATENT DOCUMENT 1: Japanese Unexamined Patent Publication No. 2019-171861

SUMMARY OF THE INVENTION

TECHNICAL PROBLEM

However, since the base film of Patent Document 1 uses medium-density polyethylene as a raw material, the difference between the heat resistance temperature of the base film and the melting temperature of the sealant film is small. As a result, the heat resistance of the base film is insufficient, and wrinkling occurs during the heat sealing process in bag making. In addition, although a uniaxially stretched film is used as the base film, the rigidity of the base film is not sufficient, and positional misalignment (i.e., print misregistration) may occur due to elongation resulting from stress during printing. Furthermore, in the packaging film of Patent Document 1, a vapor-deposited layer is formed on the base film in order to improve barrier properties. However, it is considered that cracks and fractures occur in the vapor-deposited layer due to heat shrinkage of the base film resulting from insufficient heat resistance, and due to elongation of the base film during conveyance after vapor deposition resulting from insufficient rigidity. Accordingly, sufficient gas barrier properties cannot be obtained (the water vapor transmission rate is 1.0 g/($m^2$·day) or more).

An object of the present invention is to address the issues associated with conventional base films for packaging films, such as that in Patent Document 1, and to provide a base film for a packaging film that not only has excellent recyclability but also suppresses both print misregistration caused by elongation during the printing process and wrinkling caused by heat sealing during bag making, and is capable of forming a uniform and stable vapor-deposited layer that is resistant to cracking and fracture, for example, during formation of the vapor-deposited layer and during conveyance after vapor deposition.

SOLUTION TO THE PROBLEM

Among the inventions, the invention of claim 1 is a base film configured to be laminated with a sealant film to provide a packaging film. The base film includes a stretched film including at least one base layer containing, as a main component, high-density polyethylene having a density of 0.95 g/cm$^3$ or more (hereinafter referred to as "specific high-density polyethylene) (i.e., containing 50 mass% or more of the specific high-density polyethylene). The base film has a heat shrinkage rate in a stretching direction (machine direction or transverse direction) at 120°C of less than 5%, and a tensile modulus of 2,000 MPa or more.

According to the invention of claim 2, in the invention of claim 1, the base layer contains 90 mass% or more of the high-density polyethylene.

The invention of claim 3 is a barrier base film for a packaging film. The barrier base film includes: the base film according to claim 1 or 2; and a vapor-deposited layer (such as an inorganic vapor-deposited layer or a metal vapor-deposited layer) provided on one surface of the base film. The barrier base film has an oxygen transmission rate of 1.0 cc/(m$^2$·day) or less.

The invention of claim 4 is a packaging film including: the barrier base film according to claim 3; and a sealant film laminated on a surface of the barrier base film opposite to the surface on which the vapor-deposited layer is provided.

ADVANTAGES OF THE INVENTION

The base film for a packaging film according to claim 1 (hereinafter simply referred to as "base film") is made of polyethylene. Therefore, there is no need to separate the individual constituent layers when disposing of a packaging film in which a polyethylene sealant film is laminated. Accordingly, the base film is excellent in recyclability. Furthermore, since the base film according to claim 1 is made of polyethylene containing, as a main component, specific high-density polyethylene (high-density polyethylene having a density of 0.95 g/cm$^3$ or more), it can be stretched at a high stretching temperature, and has excellent heat resistance. Accordingly, wrinkling is less likely to be caused by heat sealing during bag making. In addition, since the base film can be stretched at a high stretching ratio and has excellent mechanical strength and rigidity, print misregistration is less likely to be caused by elongation during printing. Moreover, due to the excellent heat resistance of the base film according to claim 1, when a vapor-deposited layer is formed on the base film to obtain a laminate film having barrier properties (barrier base film), heat shrinkage is suppressed during the vapor deposition process, and a uniform vapor-deposited layer resistant to cracking and fracture can be formed. As a result, good barrier properties can be achieved. In addition, due to the excellent mechanical strength and rigidity of the base film, even when a laminate film having barrier properties (barrier base film) is formed by providing a vapor-deposited layer, cracking and fracture are less likely to occur in the vapor-deposited layer during conveyance or the like, and the barrier properties are less likely to deteriorate.

The base film according to claim 2 has a high content of the specific high-density polyethylene in the base layer. Therefore, the base film exhibits extremely good recyclability and can be remelted and reprocessed. Furthermore, print misregistration caused by elongation during the printing process and wrinkling caused by heat sealing can be very effectively suppressed.

The barrier base film according to claim 3 includes a vapor-deposited layer on one surface of the base film having a high content of the specific high-density polyethylene, whereby the oxygen transmission rate is adjusted to a very low level. Accordingly, the barrier base film has good recyclability and is capable of imparting extremely high and stable barrier properties to a packaging bag after bag making.

The packaging film according to claim 4 includes a sealant film laminated on one of the base layers of the barrier base film. Therefore, a packaging bag can be easily formed.

DESCRIPTION OF EMBODIMENTS

The base film according to the present invention is composed of a stretched film including a base layer containing, as a main component, specific high-density polyethylene (high-density polyethylene having a density of 0.95 g/cm$^3$ or more). The heat shrinkage rate at 120°C and the tensile modulus (tensile modulus at room temperature) of the base film are adjusted to fall within predetermined numerical ranges. That is, the inventors of the present invention have found that the issues associated with conventional polyethylene-based monomaterial base films, that is, print misregistration caused by elongation during the printing process, wrinkling caused by heat sealing during bag making, and difficulty in obtaining stable, high barrier properties after vapor deposition, are associated with the density of the polyethylene raw material and the tensile modulus and the heat shrinkage rate of the base film. The inventors have arrived at the present invention based on the finding that, by specifying these physical property values to be within predetermined numerical ranges, the occurrence of print misregistration and wrinkling can be reduced and stable, high barrier properties can be achieved after vapor deposition.

The base film according to the present invention needs to include a base layer containing, as a main component, specific high-density polyethylene (that is, high-density polyethylene having a density of 0.95 g/cm$^3$ or more). When the density of the polyethylene is 0.95 g/cm$^3$ or more, the crystallinity of the polyethylene is improved. Therefore, by stretching the film, mechanical strength and rigidity are improved, and print misregistration caused by elongation during the printing process is suppressed. In addition, when the density of the polyethylene is 0.95 g/cm$^3$ or more, stretching at a high temperature becomes possible, whereby heat resistance is improved and wrinkling caused by heat sealing during bag making is suppressed. When the content of the specific high-density polyethylene in the base layer is less than 50 mass%, or when the density is less than 0.95 g/cm$^3$, the mechanical strength and heat resistance of the base film become insufficient, which is undesirable. The content of the specific high-density polyethylene in the base layer is preferably 70 mass% or more, more preferably 90 mass% or more, and particularly preferably 95 mass% or more.

Examples of methods for obtaining the specific high-density polyethylene (that is, high-density polyethylene having a density of 0.95 g/cm$^3$ or more) include polymerization methods (constant-pressure methods) using a Ziegler-Natta catalyst, a metallocene catalyst, or the like. The density of the specific high-density polyethylene is not particularly limited as long as it is 0.95 g/cm$^3$ or more, but is preferably 0.97 g/cm$^3$ or less. This is because when the density exceeds 0.97 g/cm$^3$, the polyethylene becomes hard and prone to tearing, which may make it difficult to produce a stretched film. In addition, the density of the specific high-density polyethylene, which is the main raw material, is more preferably 0.955 g/cm$^3$ or more, and particularly preferably 0.962 g/cm$^3$ or more.

The melting point of the specific high-density polyethylene is preferably in the range of 130 to 140°C, and more preferably 132 to 140°C. When the melting point is lower than 130°C, stretching cannot be performed at a temperature equal to or higher than a stretching temperature (120°C) described later, and the heat resistance of the stretched film may decrease. The term "melting point" as used herein refers to a value measured in accordance with JIS K 7121:1987, and is obtained by measuring the temperature at which the main endothermic peak appears using a differential scanning calorimeter (DSC).

The melt mass flow rate (MFR) of the specific high-density polyethylene is preferably 0.01 to 3.00 g/10 min, more preferably 0.02 to 2.50 g/10 min, and still more preferably 0.1 to 2.00 g/10 min. This is because when the melt mass flow rate (MFR) is 0.01 g/10 min or more, the specific high-density polyethylene can be extruded by a general-purpose extruder without using special equipment, and when the melt mass flow rate (MFR) is 3.00 g/10 min or less, sufficient film strength can be achieved. The melt mass flow rate is obtained by measurement in accordance with JIS K 7210:1999.

As described above, in order to specify the tensile modulus and the heat shrinkage rate of the base film made of the specific high-density polyethylene to be within the predetermined numerical ranges of the present invention, it is necessary to stretch an unstretched film (primary film) made of the specific high-density polyethylene, and a method in which stretching is performed at a higher stretching temperature than that typically used can be suitably used. Further, the stretching direction is not particularly limited, and may be the machine direction (MD) or the transverse direction (TD) (biaxial stretching in MD and TD is also possible). The stretch ratio is also not particularly limited, but in the case of uniaxial stretching, it is preferable to stretch the film to more than about 4 times to 10 times in the machine direction or the transverse direction, and in the case of biaxial stretching, it is preferable to stretch the film to more than about 4 times to 10 times in each of the machine direction and the transverse direction. By stretching the film at the above stretch ratio, the mechanical strength and rigidity of the base film are improved, and print misregistration caused by elongation during the printing process can be suppressed. In the case of uniaxial stretching, when the stretch ratio is 3 or less, the film may not be stretched uniformly, resulting in stretching unevenness (uneven stretching). Conversely, when the stretch ratio is greater than 10, the film may break. In the case of uniaxial stretching, the stretch ratio is more preferably 6 or more from the viewpoint of improving mechanical strength and rigidity. In order to stretch the film to more than 4 times to 10 times in uniaxial stretching, it is preferable to use specific high-density polyethylene having a density of 0.95 g/cm$^3$ or more. When polyethylene having a density of less than 0.95 g/cm$^3$ is used, stretching at a stretch ratio of more than 4 may be difficult. As a method for stretching in the machine direction, a method in which the take-up rolls are operated at different rotational speeds can be suitably used, and as a method for stretching in the transverse direction, a method in which the left and right sides of the unstretched film are gripped in a tenter and the film is expanded in the transverse direction can be suitably used.

The stretching temperature for obtaining the above stretched film is not particularly limited, but from the viewpoint of improving dimensional stability achieved by heat treatment and obtaining a film with excellent heat resistance, the stretching temperature is preferably 120°C or more and less than 130°C, which is a higher temperature range than that typically used for polyethylene films. When the stretching temperature is lower than 120°C, both dimensional stability achieved by heat treatment and heat resistance decrease. Consequently, wrinkling tends to occur when the base film is heat-sealed during bag making, which is undesirable. Conversely, when the stretching temperature is 130°C or higher, melt fracture occurs during film formation, resulting in a reduced yield, which is undesirable. The stretching temperature is more preferably 125°C or more and less than 130°C, and particularly preferably 127°C or more and less than 130°C. When the stretching temperature is 125°C or more, it is preferable to use specific high-density polyethylene having a density of 0.95 g/cm$^3$ or more. When the density is less than 0.95 g/cm$^3$, stretching at 125°C or higher may be difficult.

When suppressing print misregistration and wrinkling and achieving stable barrier properties after vapor deposition by specifying the tensile modulus (tensile modulus at room temperature) of the base film made of the specific high-density polyethylene to be within the predetermined range of the present invention, the tensile modulus needs to be 2,000 MPa or more, and is more preferably 2,500 MPa or more, and particularly preferably 3,000 MPa or more. When the tensile modulus of the base film is less than 2,000 MPa, print misregistration tends to occur during the printing process, and stable barrier properties after vapor deposition (i.e., barrier properties that do not deteriorate due to impact) may not be obtained, which is undesirable. Although a higher tensile modulus of the base film is more preferable, the upper limit is considered to be about 5,000 MPa in view of the properties of the specific high-density polyethylene, which is the main raw material.

As described above, stretching improves mechanical strength and rigidity (tensile modulus), but stretching the film makes heat shrinkage more likely to occur, and wrinkling tends to occur during heat sealing in bag making. Therefore, when suppressing print misregistration and wrinkling and achieving stable barrier properties after vapor deposition by specifying the heat shrinkage rate in the stretching direction at 120°C of the base film made of the specific high-density polyethylene to be within the predetermined range of the present invention, it is preferable that the heat shrinkage rate in the stretching direction at 120°C be less than 5%. When the heat shrinkage rate in the stretching direction of the base film at 120°C is 5% or more, wrinkling tends to occur during heat sealing in bag making, and good barrier properties may not be obtained because a uniform vapor-deposited layer cannot be formed due to heat shrinkage during vapor deposition, which is undesirable. A lower heat shrinkage rate in the stretching direction at 120°C is more preferable. Specifically, the heat shrinkage rate in the stretching direction at 120°C is more preferably less than 3%, still more preferably less than 2%, and particularly preferably less than 1%. When it is less than 0% (that is, when the film elongates at 120°C), wrinkling is instead likely to occur during heat sealing, which is undesirable.

The base film (stretched film) described above preferably has a storage modulus at 100°C of 400 MPa or more, more preferably 500 MPa or more, still more preferably 600 MPa or more, and particularly preferably 700 MPa or more. When the storage modulus of the base film at 100°C is less than 400 MPa, print misregistration tends to occur during the printing process, which is undesirable. Although a higher storage modulus of the base film at 100°C is more preferable, the upper limit is considered to be about 1500 MPa in view of the properties of the specific high-density polyethylene, which is the main raw material.

The base film according to the present invention includes a base layer having a single-layer structure and made of the specific high-density polyethylene described above. For example, a film in which a barrier resin layer (that is, a layer made of a barrier resin) is interposed between base layers made of the specific high-density polyethylene described above, or a film in which a barrier resin layer is laminated on one or both surfaces of a base layer made of the specific high-density polyethylene, is referred to as a barrier base film. The barrier resin in the present invention means a resin having a function to suppress permeation of gases such as oxygen and water vapor. As such a barrier resin, an ethylene-vinyl alcohol copolymer (EVOH), polyvinyl alcohol, a derivative thereof, or the like can be suitably used.

In a case where a barrier resin layer is interposed between base layers made of the specific high-density polyethylene, or in a case where a barrier resin layer is laminated on one or both surfaces of a base layer made of the specific high-density polyethylene, an adhesive layer may be provided between the barrier resin layer and the base layer made of the specific high-density polyethylene. Interposing such an adhesive layer can more effectively suppress delamination between the barrier resin layer and the base layer made of the specific high-density polyethylene. As such an adhesive, acid-modified polyethylene, acid-modified polypropylene, or the like can be suitably used. However, from the standpoint of a monomaterial structure, acid-modified polyethylene is preferred. In the base film according to the present invention, in the case where another layer such as a barrier resin layer is interposed between base layers made of the specific high-density polyethylene or in the case where another layer such as a barrier resin layer is laminated on either or both of the front and back surfaces of a base layer made of the specific high-density polyethylene as described above, it is preferable from the viewpoint of improving recyclability that the barrier base film contain 70 mass% or more of the specific high-density polyethylene, and more preferably 74 mass% or more of the specific high-density polyethylene.

As a method for producing the base film, a raw material containing the specific high-density polyethylene described above is mixed at a predetermined blending ratio, and formed into a film by melt extrusion using an extruder equipped with a T-die, thereby obtaining a primary film before stretching of the base film.

As a method for producing a barrier base film including a barrier resin layer between two front and back base layers made of the specific high-density polyethylene, the resins used for the base layers, the barrier resin layer, and the adhesive layers are prepared, and the resins for these layers are coextruded by a multilayer extruder equipped with a T-die, thereby obtaining a primary film before stretching of the barrier base film.

A stretched base film or a stretched barrier base film is obtained by subjecting the produced primary film before stretching of the base film or the barrier base film to uniaxial stretching under the stretching conditions described above.

The thickness of the primary film before stretching is preferably 50 to 300 μm, more preferably 80 to 250 μm, and particularly preferably 100 to 200 μm. When the thickness of the primary film is 50 μm or more, strength sufficient to withstand stress during stretching can be obtained. When the thickness of the primary film is 300 μm or less, sufficient

transparency is achieved after stretching.

The thickness of the base layer in the stretched base film and in the stretched barrier base film is preferably 10 to 40 μm, more preferably 15 to 35 μm, and particularly preferably 20 to 30 μm.

The thickness of the barrier resin layer after stretching is preferably 1 to 8 μm, more preferably 2 to 6 μm, and particularly preferably 2.5 to 5.0 μm. When the thickness of the barrier resin layer after stretching is 1 μm or more, sufficient oxygen and water vapor barrier properties for a barrier film can be obtained.

When the thickness of the barrier resin layer after stretching is 8 μm or less, a film excellent in recyclability can be obtained.

The thickness of the adhesive layer after stretching is not particularly limited, but is preferably 0.3 to 2 μm, and more preferably 0.5 to 1.5 μm.

The base film and the barrier base film according to the present invention are used to form a packaging film (that is, a film for forming a packaging bag) by laminating a sealant film on one surface of the base film or the barrier base film. The packaging films are then laminated together such that the sealant film surfaces are joined, and the resulting laminate film is cut into a predetermined shape and heat-sealed at the periphery to form a pouch, a gusset bag, a two-side-sealed bag, a three-side-sealed bag, or the like. As the sealant film to be laminated to the base film according to the present invention, low-density polyethylene (LDPE), linear low-density polyethylene (LLDPE), medium-density polyethylene, or the like can be suitably used. From the viewpoint of improving heat sealability, however, low-density polyethylene (LDPE) or linear low-density polyethylene (LLDPE) is preferred since each of these have a lower melting point than the base film and thus provides a difference in melting point from the base film.

In addition, the base film according to the present invention may be used as a packaging film by laminating, as necessary, on the surface of the base film opposite to the surface to which the sealant film is bonded, a barrier resin layer, a printing layer, a vapor-deposited layer made of a metal such as aluminum oxide, a metal oxide such as silicon dioxide, or an inorganic compound, or a base layer made of commonly used polyethylene (such as low-density polyethylene (LDPE), linear low-density polyethylene (LLDPE), medium-density polyethylene, or high-density polyethylene). In addition, in a case where a vapor-deposited layer made of a metal such as aluminum oxide, a metal oxide such as silicon dioxide, or an inorganic compound is laminated on one surface (or both surfaces) of the base film according to the present invention, it is preferable to provide, between the vapor-deposited layer and the base film, an anchor coating layer made of, for example, a mixture of a urethane-based resin, a curing agent, and a silane coupling agent, in order to improve adhesion of the vapor-deposited layer.

The base film according to the present invention may be used as a packaging film by providing, as necessary, a coating layer between the sealant film and the base film. The coating layer is made of a barrier resin. The barrier resin means a resin having a function to suppress permeation of gases such as oxygen and water vapor. As such a barrier resin, an ethylene-vinyl alcohol copolymer (EVOH), polyvinyl alcohol, a derivative thereof, or the like can be suitably used.

The melting point of the base film (after stretching) made of the specific high-density polyethylene is preferably 135°C or higher. When the melting point of the base film is 135°C or higher, the difference in melting point from the sealant film can be increased, and heat shrinkage of the base film during heat sealing can therefore be suppressed.

## Examples

The base film according to the present invention will now be described in more detail based on Examples. However, the present invention is not limited in any way to the forms of such Examples, and may be modified as appropriate without departing from the spirit of the present invention. The methods for evaluating the properties in the Examples and Comparative Examples are as follows.

### <Tensile Modulus (Tensile Modulus at Room Temperature)>

A stretched film prepared in each of the Examples and Comparative Examples was cut into a strip-shaped test specimen having a length of 200 mm in the machine direction (MD) and a width of 10 mm in the transverse direction (TD). Then, using a tensile tester (AUTOGRAPH (registered trademark) AG-5000A manufactured by Shimadzu Corporation), the test specimen was pulled in the machine direction (MD) under an atmosphere of 25°C and 65% RH with a grip separation of 80 mm at a tensile speed of 10 mm/min, in accordance with JIS K 7127. The tensile modulus (MPa) was calculated as the ratio of tensile stress to the corresponding strain within the proportional limit, based on two points in a strain range of 0 to 1%.

### <Heat Shrinkage Rate at 120°C>

A sample of a predetermined size (12 cm × 12 cm) was cut from the stretched film prepared in each of the Examples and Comparative Examples. Orthogonal gauge lines, each having a length of 10 cm, were marked on the

sample so as to be parallel to the respective edges of the sample and located 1 cm inward from the respective edges. The sample was placed in an oven at 120°C and heated for 10 minutes, and then removed and cooled to room temperature (about 25°C). The distance between the gauge lines in the stretching direction (i.e., MD) was measured for the heat-treated sample. The heat shrinkage rate (%) in the stretching direction was calculated from the change in the distance between the gauge lines before and after heating, using the following equation (1).
[Equation 1]

Heat shrinkage rate (%) in stretching direction = [(distance between gauge lines before heating - distance between gauge lines after heating)/distance between gauge lines before heating] × 100 . . (1) (1)

<Appearance After Printing>

A packaging film was prepared by bonding (laminating) a 100-μm-thick linear low-density polyethylene (LLDPE) film as a sealant film to one surface of the base film prepared in each of the Examples and Comparative Examples. Using a gravure printing machine equipped with a gravure roll and a doctor blade, a commercially available gravure printing ink was printed on the surface of the packaging film opposite to the sealant film under predetermined conditions (printing speed = 75 m/min, drying temperature = 70°C, and contact pressure of the nip roll against the base film = 0.15 MPa). The printed surface was then subjected to a visual sensory evaluation according to the following three grades.

◦: No print misregistration observed
△: Slight print misregistration observed
×: Distinct print misregistration observed

<Appearance After Heat Sealing>

A packaging film was prepared by bonding (laminating) a 100-μm-thick linear low-density polyethylene (LLDPE) film as a sealant film to one surface of the base film prepared in each of the Examples and Comparative Examples. The packaging films thus obtained were then laminated together such that the sealant films are joined. The resulting laminate film was heat-sealed at a temperature of about 120°C using a heat sealer. The heat-sealed surface was then subjected to a visual sensory evaluation according to the following four grades.

◎: No wrinkling observed
◦: Almost no wrinkling observed
△: Slight but acceptable wrinkling observed
×: Distinct wrinkling observed

<Oxygen Transmission Rate (Gas Barrier Properties)>

An anchor coating agent made of a mixture of a urethane-based resin, a curing agent, and a silane coupling agent was applied to the surface of the long stretched film prepared in each of the Examples and Comparative Examples to form an anchor coating layer having a thickness of 0.1 μm. A vapor-deposited layer made of an inorganic compound was formed on the anchor coating layer by vacuum deposition using silicon dioxide as a deposition material, thereby obtaining a barrier base film. The obtained barrier base film was cut into a test specimen having a predetermined size (15 cm × 15 cm). The oxygen transmission rate was measured for the test specimen in accordance with JIS K 7126 (Method B) under an atmosphere of 23°C and 75% RH using an oxygen transmission rate measuring apparatus (OX-TRAN manufactured by MOCON, Inc., U.S.A.). The oxygen transmission rate was measured by allowing oxygen to permeate from the vapor-deposited layer side toward the base film side. The measured oxygen transmission rate was evaluated according to the following two grades.

◦: Oxygen transmission rate is 1.0 cc/($m^2$·day) or less
×: Oxygen transmission rate exceeds 1.0 cc/($m^2$·day)

<Water Vapor Transmission Rate (Gas Barrier Properties)>

A test specimen was prepared by cutting the barrier base film used in the above oxygen transmission rate measurement (the stretched film obtained in each of the Examples and Comparative Examples, the surface of which was coated with an anchor coating agent, followed by formation of a vapor-deposited layer) into a predetermined size (15 cm × 15 cm). The water vapor transmission rate was measured for the test specimen in accordance with JIS K 7129 (Method A)

under an atmosphere of 40°C and 90% RH using a water vapor transmission rate measuring apparatus (L80-4000J manufactured by Lyssy AG, Switzerland). The water vapor transmission rate was measured by allowing water vapor to permeate from the vapor-deposited layer side toward the base film side. The measured water vapor transmission rate was evaluated according to the following two grades.

◦: Water vapor transmission rate is 1.0 g/(m$^2$·day) or less
×: Water vapor transmission rate exceeds 1.0 g/(m$^2$·day)

The resin materials used to prepare the stretched films in the Examples and Comparative Examples were as follows.

- HDPE1: High-density polyethylene (density: 0.951 g/cm$^3$, melting point: 133°C, MFR (melt flow rate measured by a method in accordance with JIS K 7210; the same applies hereinafter): 1.0 g/10 min)
- HDPE2: High-density polyethylene (density: 0.960 g/cm$^3$, melting point: 135°C, MFR: 1.0 g/10 min, NOVATEC HY540 manufactured by Japan Polyethylene Corporation)
- MDPE: Medium-density polyethylene (density: 0.943 g/cm$^3$, melting point: 126°C, MFR: 0.24 g/10 min, HI-ZEX 5100E manufactured by Prime Polymer Co., Ltd.)

[Example 1]

<Preparation of Base Film>

The above high-density polyethylene HDPE1 (i.e., specific high-density polyethylene having a density of 0.951 g/cm$^3$) was continuously formed into a film by melt extrusion at a temperature of 200°C using an extruder equipped with a T-die (manufactured by Labtech Engineering Company Ltd.), and the resulting long film was wound onto a take-up roll while being cooled by the take-up roll, thereby obtaining an unstretched film (primary film) having a thickness of about 147 μm. The unstretched film was then stretched to 6.0 times in the machine direction (MD) while being heated to 127°C, thereby preparing a uniaxially stretched polyethylene film (that is, a base film) having a thickness of about 24 μm.
Then, using the prepared base film, the tensile modulus, the heat shrinkage rate at 120°C, and the gas barrier properties after vapor deposition (oxygen transmission rate and water vapor transmission rate) were measured by the methods described above. Further, using the prepared base film, the appearance after printing and the appearance after heat sealing were evaluated by the methods described above. The measurement results and evaluation results of the base film of Example 1 are shown in Table 1 together with the properties of the base film.

[Example 2]

A uniaxially stretched polyethylene film (i.e., a base film) of Example 2 was prepared in the same manner as in Example 1 except that the resin material was changed to the high-density polyethylene HDPE2 described above. Then, using the prepared base film, the tensile modulus, the heat shrinkage rate at 120°C, and the gas barrier properties after vapor deposition were measured by the methods described above, and the appearance after printing and the appearance after heat sealing were evaluated by the methods described above. The measurement results and evaluation results of the base film of Example 2 are shown in Table 1 together with the properties of the base film.

[Examples 3, 4, and 5]

Uniaxially stretched polyethylene films (i.e., base films) of Examples 3, 4, and 5 were prepared in the same manner as in Example 1 except that the stretching temperature in stretching the unstretched film (primary film) in the machine direction (MD) was changed to 125°C, 120°C, and 128°C, respectively. Then, using the prepared base films, the tensile modulus, the heat shrinkage rate at 120°C, and the gas barrier properties after vapor deposition were measured by the methods described above, and the appearance after printing and the appearance after heat sealing were evaluated by the methods described above. The measurement results and evaluation results of the base films of Examples 3, 4, and 5 are shown in Table 1 together with the properties of the base films.

[Example 6]

A uniaxially stretched polyethylene film (i.e., a base film) of Example 6 was prepared in the same manner as in Example 1 except that the stretching temperature in stretching the unstretched film (primary film) in the machine direction (MD) was changed to 125°C and the stretch ratio was changed to 4.5. Then, using the prepared base film, the tensile

modulus, the heat shrinkage rate at 120°C, and the gas barrier properties after vapor deposition were measured by the methods described above, and the appearance after printing and the appearance after heat sealing were evaluated by the methods described above. The measurement results and evaluation results of the base film of Example 6 are shown in Table 1 together with the properties of the base film.

[Example 7]

A uniaxially stretched polyethylene film (i.e., a base film) of Example 7 was prepared in the same manner as in Example 1 except that the stretch ratio in stretching the unstretched film (primary film) in the machine direction (MD) was changed to 10. Then, using the prepared base film, the tensile modulus, the heat shrinkage rate at 120°C, and the gas barrier properties after vapor deposition were measured by the methods described above, and the appearance after printing and the appearance after heat sealing were evaluated by the methods described above. The measurement results and evaluation results of the base film of Example 7 are shown in Table 1 together with the properties of the base film.

[Comparative Example 1]

A uniaxially stretched polyethylene film (base film) of Comparative Example 1 was prepared in the same manner as in Example 1 except that the resin material was changed to MDPE (i.e., medium-density polyethylene having a density of 0.943 g/cm$^3$), the stretching temperature in stretching the unstretched film (primary film) in the machine direction (MD) was changed to 120°C, and the stretch ratio was changed to 4. Then, using the prepared base film, the tensile modulus, the heat shrinkage rate at 120°C, and the gas barrier properties after vapor deposition were measured by the methods described above, and the appearance after printing and the appearance after heat sealing were evaluated by the methods described above. The measurement results and evaluation results of the base film of Comparative Example 1 are shown in Table 1 together with the properties of the base film.

[Comparative Example 2]

A uniaxially stretched polyethylene film (base film) of Comparative Example 2 was prepared in the same manner as in Example 1 except that the stretching temperature in stretching the unstretched film (primary film) in the machine direction (MD) was changed to 115°C. Then, using the prepared base film, the tensile modulus, the heat shrinkage rate at 120°C, and the gas barrier properties after vapor deposition were measured by the methods described above, and the appearance after printing and the appearance after heat sealing were evaluated by the methods described above. The measurement results and evaluation results of the base film of Comparative Example 2 are shown in Table 1 together with the properties of the base film.

[Comparative Example 3]

An attempt was made to prepare a uniaxially stretched polyethylene film in the same manner as in Example 1 except that the stretching temperature in stretching the unstretched film (primary film) in the machine direction (MD) was changed to 130°C. However, at a stretching temperature of 130°C, frequent breakage due to resin melting occurred during stretching, and no uniaxially stretched polyethylene film suitable for evaluation was obtained.

[Comparative Example 4]

An attempt was made to prepare a uniaxially stretched polyethylene film in the same manner as in Example 1 except that the stretch ratio in stretching the unstretched film (primary film) in the machine direction (MD) was changed to 11. However, at a stretch ratio of 11, frequent breakage occurred during stretching, and no uniaxially stretched polyethylene film suitable for evaluation was obtained.

[Comparative Example 5]

An attempt was made to prepare a uniaxially stretched polyethylene film in the same manner as in Example 1 except that the stretch ratio in stretching the unstretched film (primary film) in the machine direction (MD) was changed to 3. However, at a stretch ratio of 3, so-called uneven stretching occurs, and no uniaxially stretched polyethylene film suitable for evaluation was obtained.

[Comparative Example 6]

An unstretched film (primary film) was obtained in the same manner as in Example 1 except that the thickness was adjusted to about 26 μm. Then, using the obtained unstretched film, the tensile modulus, the heat shrinkage rate at 120°C, and the gas barrier properties after vapor deposition were measured by the methods described above, and the appearance after printing and the appearance after heat sealing were evaluated by the methods described above. The measurement results and evaluation results of the base film (i.e., the unstretched film) of Comparative Example 6 are shown in Table 1 together with the properties of the base film.

[Table 1]

| | Resin materials | | | Film-forming conditions | | | | Base film properties | | | Evaluation | | | | | |
|---|---|---|---|---|---|---|---|---|---|---|---|---|---|---|---|---|
| | HDPE1 (d=0.951) | HDPE2 (d=0.960) | MDPE (d=0.943) | Stretching conditions (MD) | | Thickness (μm) | | Specific HDPE content (%) | Heat shrinkage rate at 120°C (MD:%) | Tensile modulus (MD:MPa) | Film formability | Barrier properties | | Appearance after printing | Appearance after heat sealing | Overall evaluation |
| | | | | Temperature (°C) | Ratio | Primary film | After stretching | | | | | Water vapor | Oxygen | | | |
| Example 1 | 100 | - | - | 127 | 6 | 147.4 | 23.8 | 100 | 1 | 2614 | Good | ○ | ○ | ○ | ○ | ○ |
| Example 2 | - | 100 | - | 127 | 6 | 151.4 | 24.0 | 100 | 0.7 | 3864 | Good | ○ | ○ | ○ | ◎ | ◎ |
| Example 3 | 100 | - | - | 125 | 6 | 147.4 | 24.2 | 100 | 1.1 | 2761 | Good | ○ | ○ | ○ | ○ | ○ |
| Example 4 | 100 | - | - | 120 | 6 | 147.4 | 24.8 | 100 | 1.8 | 2735 | Good | ○ | ○ | ○ | ○ | ○ |
| Example 5 | 100 | - | - | 128 | 6 | 147.4 | 25.4 | 100 | 0.4 | 2926 | Good | ○ | ○ | ○ | ◎ | ◎ |
| Example 6 | 100 | - | - | 125 | 4.5 | 103.8 | 22.0 | 100 | 0.9 | 2355 | Good | ○ | ○ | ○ | ◎ | ◎ |
| Example 7 | 100 | - | - | 127 | 10 | 246.2 | 27.2 | 100 | 0.2 | 4398 | Good | ○ | ○ | ○ | ◎ | ◎ |
| Comparative Example 1 | - | - | 100 | 120 | 4 | 114.2 | 27.6 | 0 | 12.6 | 1788 | Good | × | × | △ | × | × |
| Comparative Example 2 | 100 | - | - | 115 | 6 | 147.4 | 24.8 | 100 | 5.5 | 2699 | Good | × | × | ○ | × | × |
| Comparative Example 3 | 100 | - | - | 130 | 6 | 147.4 | - | 100 | - | - | Melt fracture | - | - | - | - | × |
| Comparative Example 4 | 100 | - | - | 127 | 11 | 147.4 | - | 100 | - | - | Breakage | - | - | - | - | × |
| Comparative Example 5 | 100 | - | - | 127 | 3 | 103.8 | - | 100 | - | - | Non-uniform | - | - | - | - | × |
| Comparative Example 6 | 100 | - | - | - | - | 26.4 | - | 100 | 1.7 | 771 | Opaque | × | × | × | ○ | × |

From Table 1, it can be seen that the base films (Examples 1 to 7), which use the specific high-density polyethylene as a main raw material and satisfy the requirements of the present invention in terms of the tensile modulus and the heat shrinkage rate at 120°C, do not cause print misregistration, have a good appearance after heat sealing, and provide good gas barrier properties (low oxygen transmission rate and water vapor transmission rate) after vapor deposition. In contrast, in Comparative Example 1, since a base film made of polyethylene having a density of less than 0.95 g/cm$^3$ is used, the film cannot be stretched to more than 4 times, resulting in a low tensile modulus. Therefore, print misregistration is likely to occur. In addition, since the heat shrinkage at 120°C is high, wrinkling is likely to occur during heat sealing, and good barrier properties cannot be obtained after vapor deposition. In Comparative Example 2, since the stretching temperature is as low as 115°C, the dimensional stability achieved by heat treatment decreases, and the heat resistance decreases (i.e., the heat shrinkage rate at 120°C increases). Therefore, wrinkling is likely to occur during heat sealing, and good barrier properties cannot be obtained after vapor deposition. In Comparative Example 6, since the base film is not stretched, the tensile modulus is low, print misregistration is likely to occur, and good barrier properties cannot be obtained after vapor deposition.

INDUSTRIAL APPLICABILITY

Since the base film according to the present invention exhibits excellent effects as described above, it can suitably be used as materials for packaging films used to form various types of packaging bags.

## Claims

**1.** A base film for a packaging film, the base film being configured to be laminated with a sealant film to provide a packaging film, the base film comprising

a stretched film including at least one base layer containing, as a main component, high-density polyethylene having a density of 0.95 g/cm$^3$ or more, wherein
the base film has a heat shrinkage rate in a stretching direction at 120°C of less than 5%, and a tensile modulus of 2,000 MPa or more.

**2.** The base film for a packaging film according to claim 1, wherein
the base layer contains 90 mass% or more of the high-density polyethylene having a density of 0.95 g/cm$^3$ or more.

**3.** A barrier base film for a packaging film, the barrier base film comprising:

the base film according to claim 1 or 2; and
a vapor-deposited layer provided on one surface of the base film, wherein
the barrier base film has an oxygen transmission rate of 1.0 cc/(m$^2$·day) or less.

**4.** A packaging film comprising:

the barrier base film according to claim 3; and
a sealant film laminated on a surface of the barrier base film opposite to the surface on which the vapor-deposited layer is provided.

## INTERNATIONAL SEARCH REPORT

International application No.
**PCT/JP2024/032904**

**A. CLASSIFICATION OF SUBJECT MATTER**

***C08J 5/18***(2006.01)i; ***B32B 9/00***(2006.01)i; ***B32B 27/32***(2006.01)i
FI: C08J5/18 CES; B32B9/00 A; B32B27/32 Z

According to International Patent Classification (IPC) or to both national classification and IPC

**B. FIELDS SEARCHED**

Minimum documentation searched (classification system followed by classification symbols)

C08J5/18; B32B1/00-43/00; B29C48/00-48/96; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-068502 A (JAPAN POLYETHYLENE CORP.) 17 May 2023 (2023-05-17) entire text, in particular, claims, paragraphs [0050]-[0058], [0074]-[0094] | 1-4 |
| X | JP 2022-039843 A (JAPAN POLYETHYLENE CORP.) 10 March 2022 (2022-03-10) entire text, in particular, claims, paragraphs [0024], [0031], [0035], [0039]-[0047], [0059]-[0060] | 1-4 |
| X | WO 2023/233902 A1 (C I TAKIRON CORP.) 07 December 2023 (2023-12-07) entire text, in particular, claims, paragraphs [0021]-[0037], [0053]-[0068] | 1, 2 |
| X | JP 2013-091729 A (MITSUI CHEMICALS, INC.) 16 May 2013 (2013-05-16) entire text, in particular, claims, paragraphs [0016], [0027], [0088]-[0097] | 1, 2 |
| X | JP 2007-137968 A (DENKI KAGAKU KOGYO KK) 07 June 2007 (2007-06-07) entire text, in particular, claims, paragraphs [0021]-[0025] | 1, 2 |
| X | JP 2023-068503 A (JAPAN POLYETHYLENE CORP.) 17 May 2023 (2023-05-17) entire text, in particular, claims, paragraphs [0032], [0050], [0056], [0078]-[0092] | 1 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/032904**

| Patent document cited in search report | Publication date (day/month/year) | Patent family member(s) | Publication date (day/month/year) |
|---|---|---|---|
| JP 2023-068502 A | 17 May 2023 | (Family: none) | |
| JP 2022-039843 A | 10 March 2022 | (Family: none) | |
| WO 2023/233902 A1 | 07 December 2023 | JP 2023-177661 A | |
| | | TW 202405066 A | |
| JP 2013-091729 A | 16 May 2013 | (Family: none) | |
| JP 2007-137968 A | 07 June 2007 | (Family: none) | |
| JP 2023-068503 A | 17 May 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019171861 A